# EUROPÄISCHE PATENTSCHRIFT

(11) **EP 0 597 243 B1**
(45) Veröffentlichungstag und Bekanntmachung des Hinweises auf die Patenterteilung: **15.05.1996**
(21) Anmeldenummer: 93116112.9
(22) Anmeldetag: 06.10.1993
(51) Int. Cl.: B01D 37/00, B01D 37/04, B01D 35/00, F17D 3/16, H05K 3/06

(54) **Verfahren und Anlage zur Versorgung wenigstens eines Verbrauchspunktes mit flüssigen hochreinen Chemikalien**
Process and plant for supplying at least one point of consumption with extremely pure liquid chemicals
Procédé et installation d'alimentation au moins d'un point de consommation avec des substances chimiques liquides de grande pureté

(30) Priorität: 07.11.1992 DE 4237651
(43) Veröffentlichungstag der Anmeldung: 18.05.1994
(73) Patentinhaber: Uhde GmbH, D-44141 Dortmund (DE)
(72) Erfinder: Schneider, Volker, Dipl.-Ing., D-58710 Menden (DE); Gail, Lothar, Dr. Dipl.-Ing., D-65189 Wiesbaden (DE); Eberhard Jost, 65795 Hattersheim (DE)
(74) Vertreter: Patentanwälte Meinke, Dabringhaus und Partner

(56) Entgegenhaltungen:
- EP-A- 0 513 428
- WO-A-90/00155
- DE-C- 3 740 804

## Beschreibung

Die Erfindung betrifft ein Verfahren zur Versorgung wenigstens eines Verbrauchspunktes, an dem Chemikalien insbesondere zur Herstellung von hochintegrierten Halbleiterschaltungen verbraucht werden, mit flüssigen hochreinen Chemikalien, wobei die in einem Wechselbehälter bereitgehaltenen Chemikalien von einer Pumpe über Rohrleitungen einem als Verdrängerpumpe ausgebildeten Reservoir zugeführt werden, derart, daß die Chemikalien mittels eines Gaskolbens über dem Flüssigkeitsspiegel und mittels eines Tauchrohres im Reservoir bei im wesentlichen konstant gehaltenem Füllstand aus dem Reservoir gefördert und durch einen Filter geführt und anschließend zu dem wenigstens einen Verbrauchspunkt geleitet werden, wobei der nicht am Verbrauchspunkt abgenommene Flüssigkeitsanteil über eine Rückflußleitung zum Wechselbehälter zurückgeführt wird, sowie eine Anlage zur Durchführung dieses Verfahrens.

Bei der Herstellung von hochintegrierten Halbleiterschaltungen, sogenannten Chips, werden innerhalb der einzelnen Herstellschritte Chemikalien, wie z.B. Ätzen, Reinigen, Spülen, usw., verwendet und verbraucht. Bedingt durch die dichte Belegung der Chipoberfläche mit Bauelementen und Leiterbahnen sowie durch die geringen Abstände zwischen ihnen kommt es bei der Chipfertigung auf höchste Präzision und Sauberkeit an. Kleinste, aus den flüssigen Chemikalien stammende partikulare Verunreinigungen, die bei den verschiedenen Ätz- und Waschvorgängen auf der Chipoberfläche abgelagert werden, unterbrechen die Leiterbahnen oder verursachen Kurzschlüsse in den Bauelementen, weil z.B. die Leiterbahnen nur 1 bis 2,5 mikron weit sind. Deshalb werden an die Reinheit der Chemikalien höchste Anforderungen gestellt (Dr. W.J. Sievert, High-purity chemicals for the semiconductor industry, Spec. chem. 9 (2), 1989, Seiten 119-129).

Die beim Chemikalienhersteller erzeugte Reinheit muß ununterbrochen bis zum Verbrauchspunkt in der Chipherstellung aufrechterhalten werden. Die Chemikalien werden in der Chipfabrik in speziellen Transportbehältern für hochreine Flüssigkeiten angeliefert, eine mögliche Ausführung eines solchen Transportbehälters ist in DE 37 21 818 A1 beschrieben. In der Chipfabrik wird der Transport- bzw. Wechselbehälter an eine auf die jeweilige Chemikalie abgestimmte Zentralversorgung angekuppelt. Die fest installierte Zentralversorgung leitet die Chemikalien zum Verbrauchspunkt.

Aus WO 90/00155 ist ein Zentralversorgungssystem für ultrareines Wasser bekannt. Dieses Zentralversorgungssystem weist allerdings keinen Anschluß für Wechselbehälter auf.

Aus der Druckschrift "Microcontamination", Oktober 1991, Seite 25 bis 30 (Kevin T. Pate) ist ein gattungsgemäßes Verfahren und eine gattungsgemäße Vorrichtung bekannt, die in Bild 4 dieser Veröffentlichung im einzelnen dargestellt sind. Bild 8 dieser Druckschrift dokumentiert die Wirksamkeit der Rückflußleitung, weil durch den geschlossenen Umlauf der Filter ständig beaufschlagt wird und damit frisch generierte Partikel ständig abgeschieden werden. Andererseits ist dieses bekannte Verfahren noch mit Mängeln behaftet. Wenn nämlich der Umlauf extern, also über den Wechselbehälter geführt wird, ist die Partikelkonzentration vor dem Filter vergleichsweise höher als bei internem Umlauf, bei dem der Wechselbehälter nicht vom Rückfluß beaufschlagt wird, wie aus einem Vergleich der Bilder 8 und 9 dieser Druckschrift hervorgeht. Der Wechselbehälter ist somit eine zusätzliche Quelle von Partikeln.

Aus der Druckschrift "the Ohmi papers, based on the exclusive series published in Microcontamination, a Canon Communications, publication, 1990, Seite 66 bis 74" sind gattungsähnliche Verfahren bzw. Vorrichtungen mit Wechselbehältern gezeigt. Dabei sind zwei unterschiedliche Prinzipien dargestellt, gemäß dem ersten erfolgt die Förderung der Chemikalien mit Pumpen, gemäß der zweiten mittels Verdrängung durch Aufbringen von Luft- oder Stickstoffdruck.

Beiden Zentralversorgungen haftet der Nachteil an, daß aus den Wechselbehältern stammende, während des Wechselbehältertransportes und Anschlusses in der Reinstchemikalie generierte Partikel in den stationären Chemikalientank eingeschleppt werden.

Aufgabe der Erfindung ist es, eine Lösung zu schaffen, mit der zuverlässig gewährleistet wird, daß die Chemikalien möglichst partikelfrei zum jeweiligen Verbrauchspunkt gefördert werden können, wobei zusätzlich auch eine einwandfreie Versorgung beim Wechselbehälteraustausch gewährleistet sein soll.

Diese Aufgabe wird mit einem Verfahren der eingangs bezeichneten Art erfindungsgemäß dadurch gelöst, daß die Chemikalien von der Pumpe durch einen Vorfilter gepumpt und erst danach in das Reservoir gefördert werden.

Es hat sich überraschend herausgestellt, daß mit dieser Verfahrensführung eine wesentliche Verbesserung der Reinheit der dem jeweiligen Verbrauchspunkt zugeführten Chemikalien erzielbar ist, wobei abhängig von der jeweiligen Chemikalie gegenüber dem gattungsgemäßen Verfahren eine um einen Faktor 10² bis 10³ geringere Partikelanzahl in den Chemikalien erreichbar ist. Dies wird darauf zurückgeführt, daß die Chemikalien ständig umlaufend geführt und gefiltert werden, und zwar sowohl stromaufwärts als auch stromabwärts des Reservoirs.

Überraschenderweise wird durch die erfindungsgemäße Verfahrensführung auch das Problem der stochastisch auftretenden Partikelkonzentrationsanstiege in der Speiseleitung gelöst. Diese Konzentrationsanstiege werden darauf zurückgeführt, daß infolge unkontrollierbarer, von außen auf die Zentralversorgung wirkende Einflüsse, wie Verkehrserschütterungen, impulsartige Körperschallwellen oder ähnliches, bislang an den Oberflächen anhaftende Partikelnester in die Chemikalie freigesetzt werden und diese kontaminieren. Dieses Problem tritt bei der erfindungsgemäßen Verfahrensführung überraschend nicht auf.

In vorteilhafter Ausgestaltung der Erfindung ist vorgesehen, daß in der Rückflußleitung kontinuierlich die Partikelkonzentration gemessen wird. Es ist dann möglich, ständig die Reinheit des umlaufenden, rückgeführten Teilstromes zu überwachen, wodurch zuverlässig gewährleistet ist, daß am jeweiligen Verbrauchspunkt nur eine entsprechend reine Chemikalie abgegeben wird.

Um auch bei dem Austausch eines Wechselbehälters eine einwandfreie Chemikalienversorgung zu gewährleisten, ist besonders vorteilhaft vorgesehen, daß während des Austausches des Wechselbehälters die Pumpe stillgesetzt wird, die Rückflußleitung abgesperrt wird und die Chemikalien aus dem Reservoir zum Verbrauchspunkt gefördert werden.

Dabei ist vorteilhaft zusätzlich vorgesehen, daß nach dem Austausch des Wechselbehälters die Rückflußleitung solange abgesperrt gehalten wird, bis die Pumpe das aus dem Reservoir entnommene Chemikalienvolumen wieder in das Reservoir nachgefördert hat.

Zur weiteren Verbesserung der Reinheit der Chemikalienzuführung ist vorgesehen, daß die Filter senkrecht von unten nach oben durchströmt werden und daß eine Entlüftung der Filter in den Wechselbehälter erfolgt. Dazu ist an den jeweiligen Entlüftungsstutzen der Filter eine Rückflußleitung angeschlossen, die in den Wechselbehälter entleert und deren Strömungswiderstand bevorzugt so eingestellt ist, daß nicht mehr als 1/20 des zirkulierenden Teilstromes rückgeführt wird. Es kann dadurch zuverlässig vermieden werden, daß der im Reservoir in die Chemikalie in Lösung gehende Anteil des Verdrängungsgases, für das z.B. Luft oder Stickstoff verwendet wird, an die Verbrauchspunkte gelangen kann.

Zur Lösung der eingangs gestellten Aufgabe sieht die Erfindung auch eine Anlage zur Durchführung des Verfahrens mit einem Wechselbehälter, einem Reservoir und wenigstens einem Filter vor, wobei zwischen dem Wechselbehälter und dem mit diesem über Rohrleitungen verbundenen Reservoir eine Pumpe angeordnet ist und wobei das Reservoir als Verdrängerpumpe ausgebildet ist, die mittels eines Gaskolbens über dem Flüssigkeitsspiegel und mittels eines Tauchrohres im Reservoir die flüssige hochreine Chemikalie fördert, wobei das Tauchrohr des Reservoirs mit wenigstens einem Verbrauchspunkt über eine Rohrleitung verbunden ist, wobei in dieser Rohrleitung ein Filter angeordnet ist und vom Verbrauchspunkt eine Rückflußleitung vorgesehen ist, die mit dem Wechselbehälter verbunden ist, die sich dadurch auszeichnet, daß stromabwärts der Pumpe und stromaufwärts des Reservoirs ein Vorfilter angeordnet ist.

In vorteilhafter Ausgestaltung der Anlage ist vorgesehen, daß in der Rückflußleitung ein Partikelzähler angeordnet ist, der es ermöglicht, ständig die Partikelkonzentration im rückgeführten Teilstrom der Chemikalie zu messen, so daß eine einwandfreie Überwachung der Anlage möglich ist.

In weiterer vorteilhafter Ausgestaltung der Anlage ist vorgesehen, daß der Wechselbehälter mit einem Anschlußflansch mit Rohranschlüssen für die Rohrleitungen versehen ist, wobei der Anschlußflansch mit einem aufsetzbaren Anschlußstück versehen ist, welches durchgehende Bohrungen aufweist, in die die von PFA-(Perfluoroalkoxypolymer)Schläuchen gebildete Rohrleitungsende eingesetzt sind, wobei zum dichten Verbinden der Rohrleitungsenden mit den Rohranschlüssen die Bohrungen in einer gemeinsamen Ebene absatzförmig zur Anschlußseite erweitert sind. Mit dieser Ausgestaltung der Anschlüsse der Wechselbehälter zum Anschluß an die Anlageleitungen ist eine besonders einfache Montage bzw. Demontage der Wechselbehälter möglich, wobei aufgrund der verschleißfreien Kupplung ohne jegliche Metallverbindung zusätzlich gewährleistet ist, daß durch die An- bzw. Abkupplung des Wechselbehälters keine Partikel in die Chemikalie gelangen können. Dabei ist eine gleichmäßige Verbindung aller Anschlüsse dadurch gewährleistet, daß die Verbindungsebenen zwischen den Rohranschlüssen und den Rohrleitungsenden in einer gemeinsamen Ebene liegen.

Zur Erleichterung der Handhabung ist dabei vorteilhaft vorgesehen, daß das Anschlußstück auf den Anschlußflansch aufschraubbar ist.

Ferner sieht die Erfindung vorteilhaft vor, daß auf den Anschlußflansch ein Transportverschluß mit Belüftung aufschraubbar ist. Es ist somit ein sicherer Verschluß des Wechselbehälters gewährleistet, so daß auch beim Transport in den Wechselbehälter keine Fremdkörper eindringen können.

Die Erfindung ist nachstehend anhand der Zeichnung beispielsweise näher erläutert. Diese zeigt in
- Fig. 1: ein Fließbild einer erfindungsgemäßen Anlage,
- Fig. 2 bis 5: jeweils in Abhängigkeit von der Filtrationszeit unterschiedliche Partikelkonzentrationen für unterschiedliche Chemikalien, die beim verfahrensmäßigen Betrieb der erfindungsgemäßen Anlage gemessen worden sind,
- Fig. 6: eine Ausgestaltung des Anschlusses für einen Wechselbehälter an die Anlage und
- Fig. 7: einen Transportverschluß für den Wechselbehälter.

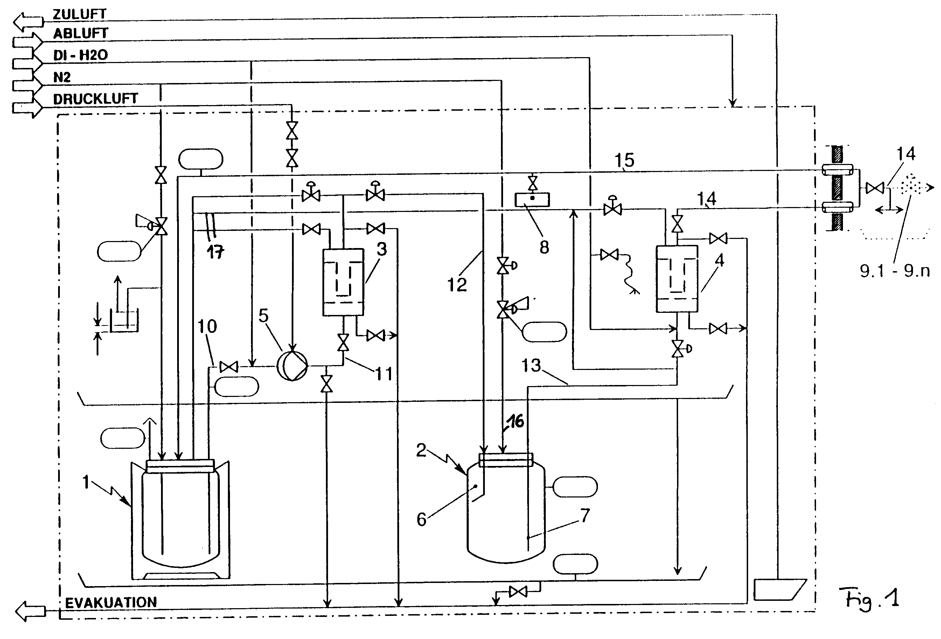

Eine erfindungsgemäße Anlage zur Versorgung wenigstens eines Verbrauchspunktes, an dem Chemikalien zur Herstellung von hochintegrierten Halbleiterschaltungen verbraucht werden, mit flüssigen hochreinen Chemikalien ist in Fig. 1 dargestellt.

Diese Anlage weist zunächst einen Wechselbehälter 1 auf, an den lösbar unterschiedliche Rohrleitungen anschließbar sind, nämlich zunächst eine Saugrohrleitung 10, die mit einer Membranpumpe 5 verbunden ist. Eine mit dem Ausgang der Membranpumpe 5 verbundene Druckrohrleitung 11 mündet erfindungsgemäß in einen Vorfilter 3, aus dem eine Druckrohrleitung 12 geführt ist, die in ein als Speisetank ausgebildetes Reservoir 2 mündet.

Dieses Reservoir 2 ist als Verdrängerpumpe ausgebildet, derart, daß die durch die Druckrohrleitung 12 zugeführten Chemikalien mittels eines Gaskolbens 6, der z.B. von unter Druck zugeführten Stickstoff gebildet ist, über dem Flüssigkeitsspiegel im Reservoir 2 und mittels eines Tauchrohres 7 aus dem Reservoir 2 in eine Druckrohrleitung 13 gefördert wird. Diese Druckrohrleitung 13 mündet in einen Endfilter 4, von dem eine Speiserohrleitung 14 zu dem oder den Verbrauchspunkt(en) 9.1 bis 9.n führt.

An den Verbrauchspunkten 9 ist über ein entsprechendes Stellelement eine Rückflußleitung 15 angeordnet, die in den Wechselbehälter 1 zurückgeführt ist. In dieser Rückflußleitung ist ein Partikelzähler 8 angeordnet. Weitere Merkmale der Anlage, auf die es hier nicht wesentlich ankommt, sind für einen Fachmann ohne weiteres dem Fließbild gemäß Fig. 1 zu entnehmen.

Der Verfahrensablauf mit einer Anlage gemäß Fig. 1 ist der folgende:
Zunächst wird ein mit einer hochreinen Chemikalie gefüllter Wechselbehälter 1 an die entsprechenden Rohrleitungen 10,15 usw. angeschlossen, wobei die Art des Anschlusses nachfolgend noch näher beschrieben wird. Die Chemikalien aus dem Wechselbehälter 1 werden von der Membranpumpe 5 durch die Saugrohrleitung 10 angesaugt und über die Druckrohrleitung 11 durch den Vorfilter 3 gepumpt, wobei vorzugsweise der Vorfilter und nachfolgend auch der Endfilter 4 senkrecht von unten nach oben durchströmt werden, wobei gleichzeitig eine Entlüftung des Filters 3 bzw. 4 in den Wechselbehälter 1 erfolgt, denn an jeden Filter 3,4 ist eine Rückflußrohrleitung 17 angeschlossen, die in den Wechselbehälter 1 mündet.

Dabei ist der Strömungswiderstand dieser Rückflußrohrleitung 17 so eingestellt, daß nicht mehr als 1/20 des zirkulierenden Teilstromes durch diese Leitung strömt. Überraschenderweise wird dadurch die Standzeit der Filter erhöht, weil die Filterflächen nicht durch ein im Filtergehäuse sich stromab der Filterflächen sammelndes Gaspolster blokkiert werden. Blockierte Filterflächen verringern nämlich die Partikelaufnahmekapazität der Filtrierschicht.

Nach Durchströmen des Vorfilters 3 wird die jeweilige Chemikalie durch die Druckrohrleitung 12 in das Reservoir 2 gefördert, wobei das von der Membranpumpe 5 geförderte Volumen aus dem Reservoir mittels des Steigrohres 7 bei im wesentlichen konstant gehaltenem Stand entnommen und durch die Druckrohrleitung 13 über das Endfilter 4 und die Speiserohrleitung 14 zu dem/den Verbrauchspunkt(en) 9.1 bis 9.n geleitet wird, der nicht verbrauchte Anteil des Volumens aus der Speiserohrleitung wird entnommen und durch die Rückflußleitung 15 zum Wechseltank 1 rückgeführt.

Das Volumen der flüssigen hochreinen Chemikalie im Speisetank bzw. Reservoir 2 ist so bemessen, daß mindestens der Chemikalienverbrauch während der Dauer des Austausches des Wechselbehälters 1 ohne Nachspeisung seitens der Membranpumpe 5 entnommen werden kann. Während des Betriebes der Anlage wird ständig mit Hilfe des Partikelzählers 8 die Partikelkonzentration in der Rückflußrohrleitung 15 gemessen.

Während des Austausches eines Wechselbehälters 1 wird die Membranpumpe 5 stillgesetzt, die Rückflußrohrleitung 15 wird abgesperrt und die Verdrängerpumpe (6) fördert aus dem entsprechend bemessenen Volumen des Reservoirs 2 zu dem/den Verbrauchspunkt(en) 9.1 bis 9.n. Nach dem Austausch des Wechseltanks 1 bleibt die Rückflußrohrleitung 15 solange abgesperrt, bis die Membranpumpe 5 das von der Verdrängerpumpe entnommene Volumen wieder in den Speisetank (Reservoir 2) nachgefördert hat.

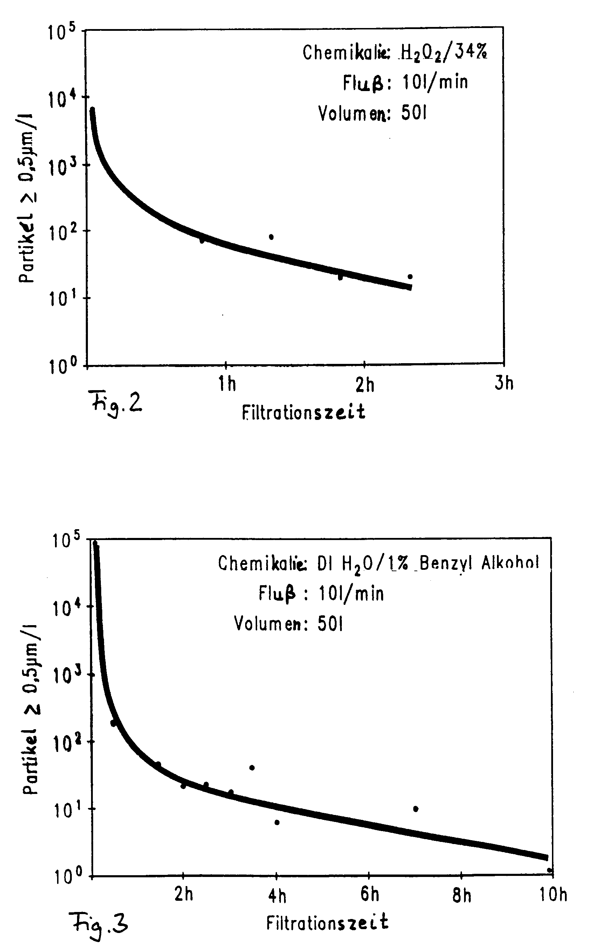

Aus den Figuren 2 bis 5 geht die mit einem Partikelzähler 8 mit einer vorstehend beschriebenen und betriebenen Anlage gemessene Partikelkonzentration in Abhängigkeit der Filtrationszeit hervor.

Dabei ist jeweils die Anzahl der Partikel in Bezug auf 1 l Flüssigkeit angegeben, wobei nur Partikel berücksichtigt sind, die größer als 0,5 µm sind.

Fig. 2 zeigt die Meßergebnisse für H₂O₂/34 % bei einem Fluß von 10 l/min und einem Volumen von 50 l, Fig. 3 zeigt die Ergebnisse für DI H₂O/1 % Benzylalkohol bei einem Fluß von 10 l/min und einem Volumen von 50 l jeweils in Abhängigkeit von der Filtrationszeit.

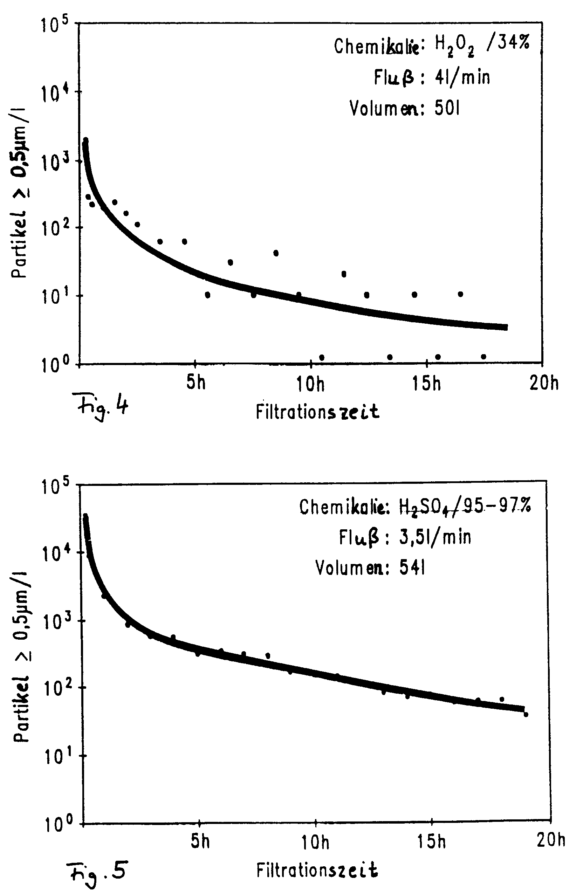

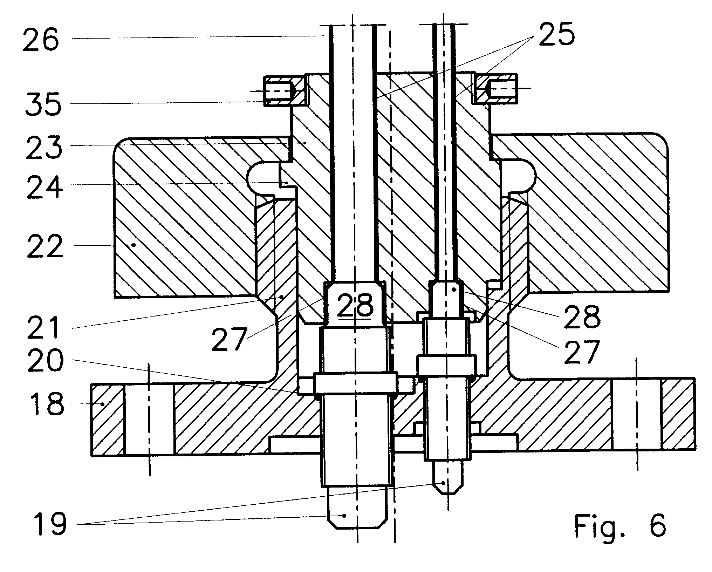

Fig. 4 zeigt die Ergebnisse für H₂O₂/ 34 % beim Fluß von 4 l/min und einem Volumen von 50 l, während Fig. 5 die Ergebnisse für H₂SO₄/95 - 97 % bei einem Fluß von 3,5 l/min und einem Volumen von 54 l zeigt. Gegenüber dem aus "Microcontamination", Oktober 1991, Seite 25 bis 30, Bild 9 bekannten Verfahren lassen sich überraschenderweise erheblich geringere Partikelkonzentrationen erreichen, die um ein Faktor 10² bis 10⁴ geringer sind.

In Fig. 6 ist eine vorteilhafte Kupplungsverbindung zum Ankuppeln bzw. Abkuppeln des Wechselbehälters 1 von den entsprechenden Rohrleitungen (10,15, usw.) der Anlage dargestellt.

Der in Fig. 6 nicht dargestellte Wechselbehälter 1 weist einen Anschlußflansch 18 auf, der mit Rohranschlüssen 19 versehen ist, und zwar entsprechend mit so vielen, wie jeweils im Einzelfall benötigt werden. Diese Rohranschlüsse 19 sind entsprechend in Bohrungen des Anschlußflansches 18 eingesetzt und mit Dichtringen 20 abgedichtet.

Der Anschlußflansch ist nach außen hin in ein Rohrstück 21 verlängert, das außenseitig mit einem Gewinde zum Aufschrauben einer Überwurfmutter 22 versehen ist. Diese Überwurfmutter 22 dient zum Aufsetzen bzw. Befestigen eines mit 23 bezeichneten Anschlußstückes, das in das Rohrstück 21 einsetzbar ist und mittels eines umlaufenden Bundes 24 am freien Ende des Rohrstückes 21 anliegt und mittels der Mutter 22 entsprechend gesichert werden kann.

Das Anschlußstück 23 ist mit durchgehenden Bohrungen 25 versehen, die mit den Rohranschlüssen 19 des Anschlußflansches 18 fluchten. In diese durchgehenden Bohrungen sind Rohrleitungsenden 26 eingesetzt, die bevorzugt aus PFA bestehen, und die entsprechend mit den Rohrleitungen 10,15 usw. verbunden bzw. einstückig sind. Dabei sind die Bohrungen 25 zur Anschlußseite hin in einer gemeinsamen Ebene erweitert, dieser erweiterte Bereich ist mit 27 bezeichnet. Dieser erweiterte Bereich 27 dient jeweils zur Aufnahme eines entsprechend bemessenen verjüngten Endes 28 der Rohranschlüsse 19 des Anschlußflansches 18.

Wird nun das Anschlußstück 23 auf bzw. in das Rohrstück 21 des Anschlußflansches 18 eingesetzt, so greifen die Enden 28 der Rohranschlüsse 19 in die Bereiche 27 der Bohrungen 25 am Ansatzstück 23 ein, derart, daß die Schlauchenden 26 entsprechend aufgeweitet werden und sich dichtend um die Enden 28 legen. Durch entsprechendes Anziehen der Mutter 22 wird eine dichte Verbindung gewährleistet.

Da die Rohranschlüsse 19 aus einem geeigneten Kunststoffmaterial und die Schlauchenden 26 aus PFA bestehen, das entsprechend verformbar ist und ein Aufsetzen auf die Enden 28 ermöglicht, steht eine völlig verschleißfreie leicht zu koppelnde bzw. abzukoppelnde Verbindung zur Verfügung, die gewährleistet, daß beim Wechselbehälteraustausch keine Partikel in den Bereich der Rohrleitungen gelangen können.

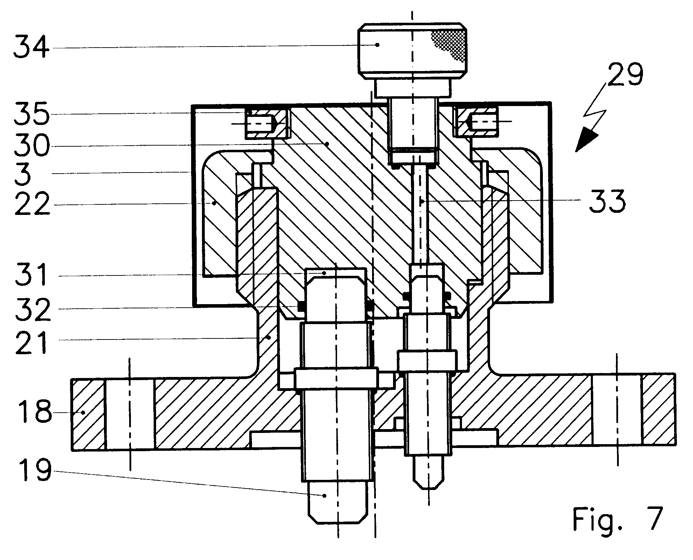

Fig. 7 zeigt einen Transportverschluß 29, der entsprechend auf den Anschlußflansch 18 bzw. das Rohrstück 21 aufschraubbar ist. Dazu weist der Transportverschluß 29 ein Transportanschlußstück 30 auf, das wie das Anschlußstück 23 ausgebildet ist, mit dem Unterschied, daß keine durchgehenden Bohrungen vorgesehen sind, sondern daß zur Aufnahme der Enden 28 der Rohranschlüsse 19 Sackbohrungen 31 vorgesehen sind, die zusätzlich mit einem Dichtring 32 ausgerüstet sind. Wenigstens eine Sackbohrung 31 ist allerdings in eine Belüftungsbohrung 33 verlängert, die nach außen hin mit einer Belüftungsschraube 34 oder dgl. verschlossen ist. Der Transportanschluß 30 und die Überwurfmutter 22 sind nach außen hin von einer Sicherungshaube 35 umgeben.

Die Montage bzw. Demontage dieses Transportverschlusses 29 geschieht in gleicher Weise wie bei der Montage bzw. Demontage des Anschlußstückes 23.

Natürlich ist die Erfindung nicht auf die dargestellten Ausführungsbeispiele beschränkt. Weitere Ausgestaltungen der Erfindung sind möglich, ohne den Grundgedanken zu verlassen.

## Patentansprüche

1. Verfahren zur Versorgung wenigstens eines Verbrauchspunktes, an dem Chemikalien insbesondere zur Herstellung von hochintegrierten Halbleiterschaltungen verbraucht werden, mit flüssigen hochreinen Chemikalien, wobei die in einem Wechselbehälter bereitgehaltenen Chemikalien von einer Pumpe über Rohrleitungen einem als Verdrängerpumpe ausgebildeten Reservoir zugeführt werden, derart, daß die Chemikalien mittels eines Gaskolbens über dem Flüssigkeitsspiegel und mittels eines Tauchrohres im Reservoir bei im wesentlichen konstant gehaltenem Füllstand aus dem Reservoir gefördert und durch einen Filter geführt und anschließend zu dem wenigstens einen Verbrauchspunkt geleitet werden, wobei der nicht am Verbrauchspunkt abgenommene Flüssigkeitsanteil über eine Rückflußleitung zum Wechselbehälter zurückgeführt wird,
dadurch gekennzeichnet,
daß die Chemikalien von der Pumpe durch einen Vorfilter gepumpt und erst danach in das Reservoir gefördert werden.

2. Verfahren nach Anspruch 1,
dadurch gekennzeichnet,
daß in der Rückflußleitung kontinuierlich die Partikelkonzentration gemessen wird.

3. Verfahren nach Anspruch 1 oder 2,
dadurch gekennzeichnet,
daß während des Austausches des Wechselbehälters die Pumpe stillgesetzt wird, die Rückflußleitung abgesperrt wird und die Chemikalien aus dem Reservoir zum Verbrauchspunkt gefördert werden.

4. Verfahren nach Anspruch 3,
dadurch gekennzeichnet,
daß nach dem Austausch des Wechselbehälters die Rückflußleitung solange abgesperrt gehalten wird, bis die Pumpe das aus dem Reservoir entnommene Chemikalienvolumen wieder in das Reservoir nachgefördert hat.

5. Verfahren nach Anspruch 1 oder einem der folgenden,
dadurch gekennzeichnet,
daß die Filter senkrecht von unten nach oben durchströmt werden und daß eine Entlüftung der Filter in den Wechselbehälter erfolgt.

6. Anlage zur Durchführung des Verfahrens nach Anspruch 1 oder einem der folgenden mit einem Wechselbehälter, einem Reservoir und wenigstens einem Filter, wobei zwischen dem Wechselbehälter und dem mit diesem über Rohrleitungen verbundenen Reservoir eine Pumpe angeordnet ist und wobei das Reservoir als Verdrängerpumpe ausgebildet ist, die mittels eines Gaskolbens über dem Flüssigkeitsspiegel und mittels eines Tauchrohres im Reservoir die flüssige hochreine Chemikalie fördert, wobei das Tauchrohr des Reservoirs mit wenigstens einem Verbrauchspunkt über eine Rohrleitung verbunden ist, wobei in dieser Rohrleitung ein Filter angeordnet ist und vom Verbrauchspunkt eine Rückflußleitung vorgesehen ist, die mit dem Wechselbehälter verbunden ist,
dadurch gekennzeichnet,
daß stromabwärts der Pumpe (5) und stromaufwärts des Reservoirs (2) ein Vorfilter (3) angeordnet ist.

7. Anlage nach Anspruch 6,
dadurch gekennzeichnet,
daß in der Rückflußleitung (15) ein Partikelzähler (8) angeordnet ist.

8. Anlage nach Anspruch 6 oder 7,
dadurch gekennzeichnet,
daß der Wechselbehälter (1) mit einem Anschlußflansch (18) mit Rohranschlüssen (19) für die Rohrleitungen versehen ist, wobei der Anschlußflansch (18) mit einem aufsetzbaren Anschlußstück (23) versehen ist, welches durchgehende Bohrungen (25) aufweist, in die die von PFA-Schläuchen gebildeten Rohrleitungsenden (26) eingesetzt sind, wobei zum dichten Verbinden der Rohrleitungsenden (26) mit den Rohranschlüssen (19) die Bohrungen (25) in einer gemeinsamen Ebene absatzförmig (27) zur Anschlußseite erweitert sind.

9. Anlage nach Anspruch 8,
dadurch gekennzeichnet,
daß das Anschlußstück (23) auf den Anschlußflansch (18) aufschraubbar ist.

10. Anlage nach Anspruch 8 oder 9,
dadurch gekennzeichnet,
daß auf den Anschlußflansch (18) ein Transportverschluß (29) mit Belüftung (33) aufschraubbar ist.

## Claims

1. Process for supplying at least one consumption point, at which chemicals are consumed, particularly for the production of highly integrated semi-conductor circuits, with liquid highly pure chemicals, the chemicals kept in readiness in an exchange container being conveyed by a pump via pipes to a reservoir constructed as a displacement pump, in such a way that the chemicals are conveyed out of the reservoir by means of a gas piston, above the level of the liquid and by means of an immersion pipe in the reservoir, the level being kept largely constant, and through a filter and finally to at least one of the consumption points, that part of the liquid which is not collected at the consumption point being conveyed back to the exchange container via a return pipe, characterised by the fact that the chemicals are pumped by a pump through a preliminary filter and are only then conveyed into the reservoir.

2. Process in accordance with Claim 1, characterised by the fact that the particle concentration is measured continuously in the return flow pipe.

3. Process in accordance with Claim 1 or 2, characterised by that fact that during the exchange of the exchange container the pump is turned off, the return flow pipe shut off and the chemicals conveyed from the reservoir to the consumption point.

4. Process in accordance with Claim 3, characterised by the fact that after the exchange of the exchange container the return flow pipe is kept shut off until the pump has returned to the reservoir the volume of chemicals which was taken from the latter.

5. Process in accordance with Claim 1 or one of the subsequent claims, characterised by the fact that the flow passes through the filters vertically from the top upwards and that the air is exhausted from the filters into the exchange container.

6. Apparatus for the performance of the process described in Claim 1 or one of the subsequent claims, with an exchange container, a reservoir and at least one filter, a pump being provided between the exchange container and the reservoir connected to the latter via pipes, and the reservoir being constructed as a displacement pump by which the liquid highly pure chemical is conveyed by means of a gas piston above the level of the liquid and by means of all immersion pipe in the reservoir, the immersion pipe of the reservoir being connected with at least one consumption point via a pipe, a filter being provided in this pipe and a return flow pipe from the consumption point being provided and connected to the exchange container, characterised by the fact that a preliminary filter (3) is provided downstream from the pump (5) and upstream from the reservoir (2).

7. Apparatus in accordance with Claim 6, characterised by the fact that a particle counter (8) is provided in the return flow pipe (15).

8. Apparatus in accordance with Claims 6 or 7, characterised by the fact that the exchange container (1) is provided with a connection flange (18) with pipe connections (19) for the pipes, the connection flange (18) being equipped with an attachable connection piece (23) having through-bores (25) into which are inserted the pipe ends (26) formed by PFA tubes, the bores (25) widening step-wise in one common plane towards the connection side in order to provide a tight connection of the pipe ends (26) with the pipe connections (19).

9. Apparatus in accordance with Claim 8, characterised by the fact that the connection piece (23) can be screwed onto the connection flange (18).

10. Apparatus in accordance with Claim 8 or 9, characterised by the fact that a transport closure (29) with ventilation (33) can be screwed onto the connection flange (18).

## Revendications

1. Procédé pour alimenter on substances chimiques liquides de grands pureté, au moins un point de consommation sur lequel on utilise dos produits chimiques, en particulier pour la fabrication de circuits à semiconducteurs à haut pouvoir d'intégration, les produits chimiques mis à disposition dans un conteneur interchangeable étant amenés par une pompe par le biais de canalisation à un réservoir conçu sous forme de pompe de refoulement de telle sorte que les produits chimiques sont acheminés au moyen d'un piston à gaz au-dessus du niveau du liquide et au moyen d'un tube d'immersion dans le réservoir pour un niveau de remplissage maintenu sensiblement constant et ils sont évacués du réservoir et amenés par l'intermédiaire d'un filtre et ensuite dirigés sur au moins un point de consommation, la portion de liquide qui n'est pas prélévée sur le point de consommation étant renvoyée par une conduite de renvoi au conteneur interchangeable, caractérisé en ce que les produits chimiques sont d'abord amenés par la pompe dans un préfiltre avant d'être acheminés dans le réservoir.

2. Procédé selon la revendication 1, caractérisé en ce que la concentration de particules est mesurée en continu dans la conduite de renvoi.

3. Procédé selon la revendication 1 ou 2, caractérisé en ce que la pompe est arrêtée pendant l'échange du conteneur interchangeable, la conduite de renvoi est bloquée et les produits chimiques sont acheminés depuis le réservoir vers le point de consommation.

4. Procédé selon la revendication 3, caractérisé en ce qu'après l'échange du conteneur interchangeable, on maintient le bloquage de la conduite de renvoi jusqu'à ce que la pompe ramène le volume dos produits chimiques prélevé du réservoir à nouveau dans le réservoir.

5. Procédé selon la revendication 1 ou l'une des revendications suivantes, caractérisé en ce que les filtres sont traversés par le liquide verticalement du bas vers le haut et en ce qu'une aération ou purge dos filtres s'effectue dans le conteneur interchangeable.

6. Installation pour la réalisation du procédé selon la revendication 1 ou l'une des revendications suivantes, avec un conteneur interchangeable, un réservoir et au moins un filtre, dans laquelle entre le conteneur interchangeable et le réservoir raccordé à celui-ci par des canalisations est agencée une pompe et dans laquelle le réservoir est conçu sous forme de pompe refoulante, qui achemine le produit chimique liquide de grande pureté au moyen d'un piston à gaz au-dessus du niveau du liquide et au moyen d'un tube d'immersion dans le réservoir, le tube d'immersion du réservoir étant raccordé par l'intermédiaire d'une canalisation au moins à un point de consommation, un filtre étant disposé dans cette canalisation et une conduite de renvoi étant prévue depuis le point de consommation qui est raccordé su conteneur interchangeable,
caractérisé en ce qu'en aval de la pompe (5) et en amont du réservoir (2) est agencé un préfiltre (3).

7. Installation selon le revendication 6, caractérisée en ce qu'un compteur de particules (8) est disposé dans la conduite de renvoi (15).

8. Installation selon la revendication 6 ou 7, caractérisée en ce que le conteneur interchangeable (1) est muni d'une bride de raccordement (18) avec des raccords tubulaires (19) pour les canalisations, la bride de raccordement (18) étant munie d'un élément de raccord (23) montable sur celle-ci et qui comporte des alésages traversants (25) dons lesquels sont insérés les extrémités de canalisation (26) formées par des tuyaux flexibles en PFA, moyennant quoi pour le raccordement étanche des extrémités de canalisation (26) sur les raccords tubulaires (19) les alésages (25) sont élargis dans un plan commun en forme de talon (27) vers le côté raccordement.

9. Installation selon la revendication 8, caractérisée en ce que l'élément de raccord (23) est vissable sur la bride de raccordement (18).

10. Installation selon la revendication 8 ou 9, caractérisée en ce que sur la bride de raccordement (18) une fermeture temporaire pour le transport (29) avec aé ration (33) peut être fixée par vissage.
